# EUROPEAN PATENT APPLICATION

(11) **EP 4 703 950 A1**
(43) Date of publication of application: **04.03.2026**
(21) Application number: 25198844.0
(22) Date of filing: 28.08.2025
(51) Int. Cl.: G06F 30/15, G06F 30/17, G06F 30/23, G06F 30/27

(54) **COMPUTER SYSTEM FOR EVALUATION OF COMPONENTS SUPPORTED BY ARTIFICIAL INTELLIGENCE / MACHINE LEARNING**

(30) Priority: 30.08.2024 US 202418821245
(71) Applicant: PRATT & WHITNEY CANADA CORP., Longueuil, Québec J4G 1A1 (CA)
(72) Inventor: OZÓG, Mateusz, 35-323 Rzeszów (PL); SWABY, Nadia, York, M6N 3T3 (CA)
(74) Representative: Dehns

(57) **Abstract**

A method (100) and system (10) for evaluating a component includes receiving (102) a component definition that includes component geometry and one or more of a boundary condition set and a load set. A comparator model (34) compares (106) component geometry to one or more design envelopes (32A), and compares load sets to one or more prior load sets, each from a database of stored component definitions (32F, 32G). Based on the comparison, an analysis model (36) forms (108) a detailed analysis or an iterative analysis to produce a result set. A results module (22) generates (110) an evaluation disposition of the component definition based on the result set.

## Description

### BACKGROUND

The present disclosure is directed to computer-aided evaluation of turbo machinery component designs and, more specifically, to systems and methods for evaluating component designs relative to prior component designs.

The design of gas turbine engine components frequently benefits from detailed, computer-aided, computation of temperature, deflection, stress, and strain result sets of the component. During the design process, component geometry and component loads (e.g., mechanical loads, thermal loads, and/or aerodynamic loads) may change as features of the component are optimized or revised based on new information. However, updated result sets can be time consuming and costly to produce as resources are expended for incremental changes to component designs. While prior computational methods for evaluating components are considered suited for the intended purpose, advances in component evaluation are desirable for reducing overall design iteration time and cost.

### SUMMARY

According to a first aspect of the present disclosure, a method includes receiving, by an input module, a component definition that includes component geometry and at least one of a boundary condition set and a load set. The method further includes comparing, using a comparator model, the component geometry to one or more design envelopes associated with stored component definitions, the component geometry defining one or more geometric parameters, and the design envelope defining one or more geometric limits of the component. The method further includes comparing, using the comparator model, the load set to load sets associated with a subset of stored component definitions, the load set defining one or more mechanical loads, aerodynamic loads, and thermal loads. The method further includes performing, using an analysis model, an analysis based on the component definition and the subset of stored component definitions upon determining the one or more geometric parameters are bound by respective geometric limits and at least one of the mechanical loads, the aerodynamic loads, and the thermal loads of the subset of stored component definitions bound corresponding mechanical loads, aerodynamic loads, and thermal loads of the component definition. The method further includes outputting an evaluation disposition to a user interface based on the analysis and incorporating the component into a gas turbine engine based on the evaluation disposition.

According to a second aspect of the present disclosure, a component evaluation system includes a user interface, an input module, a data module, a compute module, a results module, a processor, and computer-readable memory. The input module is configured to receive a component definition. The data module includes stored component definitions. The compute module includes a comparator model and an analysis model. The results module is configured to evaluate result sets output by the analysis model. The computer-readable memory is encoded with instructions that when executed by the processor cause the component evaluation system to receive, by the input module, the component definition that includes component geometry and at least one of a boundary condition set and a load set. The computer-readable memory is further encoded with instructions that when executed by the processor cause the component evaluation system to compare, using the comparator model, the component geometry to one or more design envelopes associated with stored component definitions. The component geometry defines one or more geometric parameters, and the design envelope defines one or more geometric limits of the component. The computer-readable memory is further encoded with instructions that when executed by the processor cause the component evaluation system to compare, using the comparator model, the load set to load sets associated with a subset of stored component definitions. The load set defines one or more of mechanical loads, aerodynamic loads, and thermal loads. The computer-readable memory is further encoded with instructions that when executed by the processor cause the component evaluation system to perform, using the analysis model, an analysis based on the component definition and the subset of stored component definitions upon determining the one or more geometric parameters are bound by respective geometric limits and at least one of the mechanical loads, aerodynamic loads, and the thermal loads of the subset of stored component definitions bound corresponding mechanical loads, aerodynamic loads, and thermal loads of the component definition. The computer-readable memory is further encoded with instructions that when executed by the processor cause the component evaluation system to output, by the results module, an evaluation disposition to a user interface based on a result set output by the analysis.

According to a third aspect of the present disclosure, a computing device comprises a processor, and computer-readable memory. The computer-readable memory is encoded with instructions that when executed by the processor cause the computing device to receive a component definition that includes component geometry and at least one of a boundary condition set and a load set. The computer-readable memory is further encoded with instructions that when executed by the processor cause the computing device to compare the component geometry to one or more design envelopes associated with stored component definitions. The component geometry defines one or more geometric parameters, and the design envelope defines one or more geometric limits of the component. The computer-readable memory is further encoded with instructions that when executed by the processor cause the computing device to compare the load set to load sets associated with a subset of stored component definitions. The load set defines one or more mechanical loads, aerodynamic loads, and thermal loads. The computer-readable memory is further encoded with instructions that when executed by the processor cause the computing device to perform an analysis based on the component definition and the subset of stored component definitions upon determining the one or more geometric parameters are bound by respective geometric limits and at least one of the mechanical loads, aerodynamic loads, and the thermal loads of the subset of stored component definitions bound corresponding mechanical loads, aerodynamic loads, and thermal loads of the component definition. The computer-readable memory is further encoded with instructions that when executed by the processor cause the computing device to output an evaluation disposition to a user interface based on a result set output by the analysis.

Various embodiments of the invention are set out in the following detailed description in conjunction with the appended drawings, and in the dependent claims. It will be apparent to the skilled person that some or all features disclosed in connection with one embodiment may be individually applicable to other embodiments, whether or not described in detail herein, within the scope of the invention as defined by the claims.

### BRIEF DESCRIPTION OF THE DRAWINGS

FIG. 1 is a schematic view of a component evaluation system.
FIG. 2 is a flow chart describing the functional relationship between and among modules of the component evaluation system.
FIG. 3 is a flow chart describing a method of using the component evaluation system.

### DETAILED DESCRIPTION

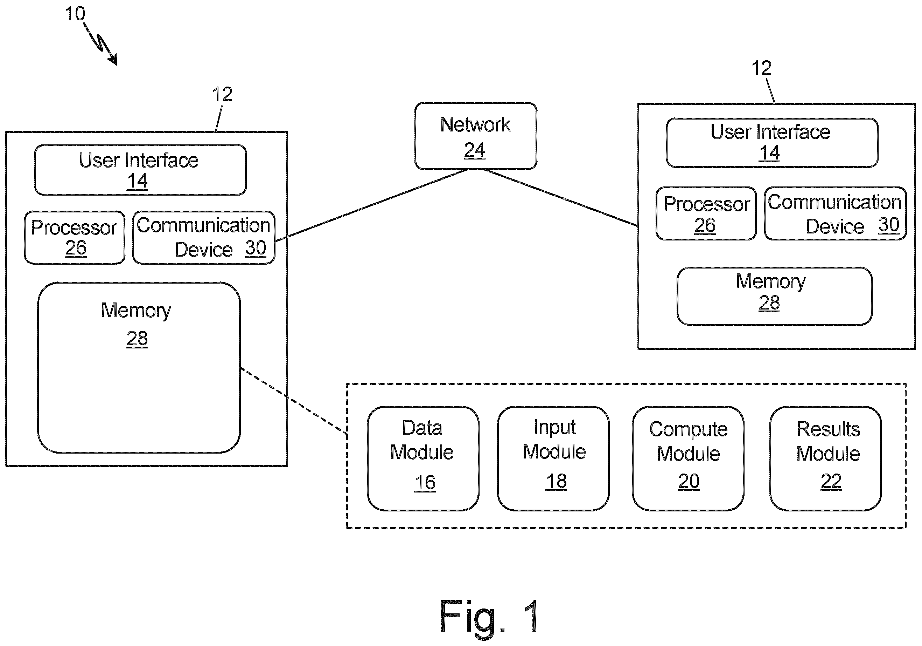

FIG. 1 is a diagram depicting component evaluation system 10 capable of computing one or more component result sets such as temperature, deflection, stress, and strain for a component definition and classifying the component definition as compliant or non-compliant with one or more design criteria based on the result sets, a database of historical component designs, and associated historical result sets. A component definition includes geometry, boundary conditions, and loads. Post-evaluation, component definition further includes result sets determined based on geometry, boundary conditions, and loads. Design criteria can include one or more stress criteria, strain criteria, deflection criteria, temperature criteria, and cycle life criteria. Using component evaluation system 10 and methods described herein, new component definitions which amount to relatively small deviations from prior designs can be evaluated without time-consuming and costly detailed analysis. New component definitions that deviate substantially from historical component definitions are evaluated with detailed analysis; the post-evaluated new component definition added to the historical component definition dataset to aid future component evaluations.

As depicted in FIG. 1, component evaluation system 10 includes one or more computing devices 12, user interface 14, data module 16, input module 18, compute module 20, and results module 22. One or more of user interface 14 and modules 16, 18, 20, and 22 describe functional groupings of component evaluation system 10 and associated methods described herein. In further examples, component evaluation system 10 can include more or less modules, or modules with different functional groups than the modules described herein without detracting from this disclosure. Accordingly, functions attributed to user interface 14, data module 16, input module 18, compute module 20, and results module 22 can be attributed to a different module or modules in other examples of component evaluation system 10.

Computing device 12 is an electronic device that is connected to network 24 via a wireless and/or a wired connection. Computing device 12 includes processor 26, memory 28, user interface 14, and communication device 30. Computing device 12 can be a computer, server, database, tablet, a smartphone, or other mobile or stationary computing device, among other options. While the following disclosure refers to a computing device (singular), the method and functions attributed to a single computing device can be distributed among multiple computing devices 12 in other examples. That is, functionality attributed herein to computing device 12 can, in certain examples, be distributed among multiple computing devices 12, which may or may not be geographically collocated.

Processor 26 executes software, applications, and/or programs stored on memory 28. Examples of processor 26 can include one or more of a processor, a microprocessor, a controller, a digital signal processor (DSP), an application specific integrated circuit (ASIC), a field-programmable gate array (FPGA), or other equivalent discrete or integrated logic circuitry. Processor 26 can be entirely or partially mounted on one or more circuit boards.

Memory 28 is configured to store information and, in some examples, can be described as a computer-readable storage medium. Memory 28, in some examples, can be described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory 28 is a temporary memory. As used herein, a temporary memory refers to a memory having a primary purpose that is not long-term storage. Memory 28, in some examples, is described as volatile memory. As used herein, a volatile memory refers to a memory that does not maintain stored contents when power to the memory is turned off. Examples of volatile memories can include random access memories (RAM), dynamic random access memories (DRAM), static random access memories (SRAM), and other forms of volatile memories. In some examples, memory 28 is used to store program instructions for execution by processor 26. Memory 28, in one example, is used by software, applications, and/or programs running on computing device 12 to temporarily store information during program execution.

Memory 28, in some examples, also includes one or more computer-readable storage media. Memory 28 can be configured to store larger amounts of information than volatile memory. Memory 28 can further be configured for long-term storage of information. In some examples, memory 28 includes non-volatile storage elements. Examples of such non-volatile storage elements can include, for example, magnetic hard discs, optical discs, floppy discs, flash memories, or forms of electrically programmable memories (EPROM) or electrically erasable and programmable (EEPROM) memories.

Memory 28 can store, among other things, code that when executed by processor 26 causes component evaluation system 10 to perform one or more functions attributable to input user interface 14, data module 16, input module 18, compute module 20, and results module 22.

User interface 14 is an input and/or output device that enables a user to control the operation of computing device 12. User interface 14 can include one or more of a sound card, a video graphics card, a speaker, a display device (such as a liquid crystal display (LCD), a light emitting diode (LED) display, an organic light emitting diode (OLED) display, etc.), a touchscreen, a keyboard, a mouse, a joystick, or other type of device for facilitating input and/or output of information in a form understandable to users, machines, or other computing devices.

Communication device 30 is an input and/or output device that enables computing device 12 to electrically communicate with other computing devices via network 24. Communication device 30 can include a network interface card (NIC), a modem, a bridge, a hub, and/or a router, which may communicate with other network-attached components via wired and/or wireless connections.

Network 24 is a system of interconnected computing devices 12 interconnected between one or more local area networks (LAN) and/or one or more wide area networks (WAN). Local area networks connect devices that are geographically close to one another. LAN can be a wired or wireless network and can include one or more switches, routers, gateways, or other suitable network infrastructure. WAN is a network suitable for connecting devices that are separated by greater geographic distances than devices connected via a LAN. WAN includes network infrastructure for connecting devices separated by larger geographics distances. In some examples, WAN can include a private cellular network (PCN). In other examples, WAN is the Internet.

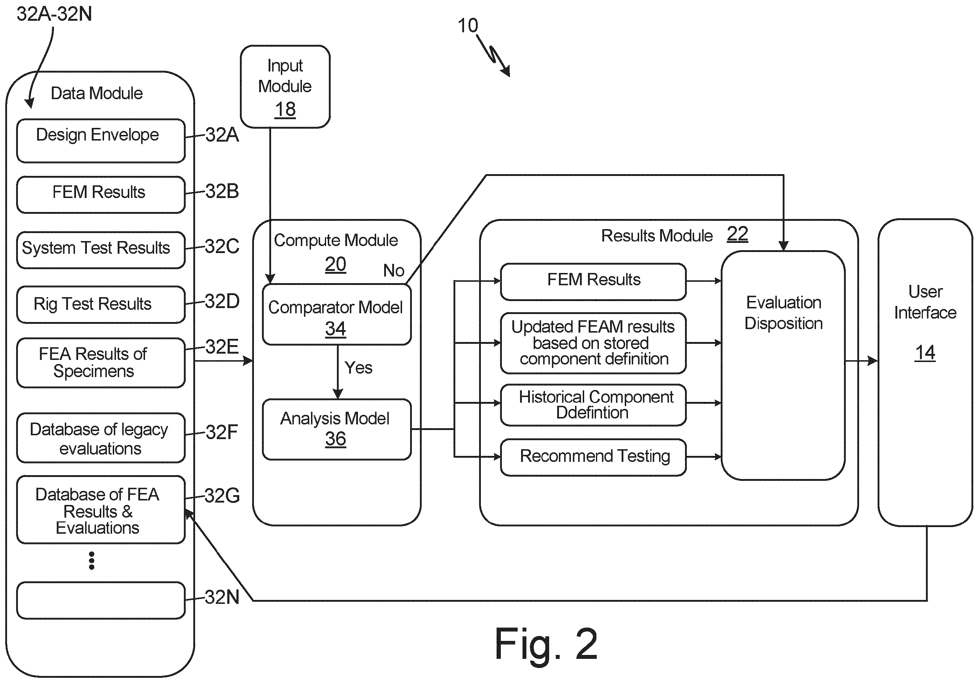

FIG. 2 is a flow chart describing the functional relationship between and among input module 18, data module 16, compute module 20, results module 22, and user interface 14. Component evaluation system 10 evaluates new component definitions received at input module 18 by comparing one or more aspects of the component definition to stored component definitions retained by data module 16, performing one or computations by compute module 20, and outputting result sets and an evaluation disposition via results module 22 and user interface 14. Component definitions that are similar to stored component definitions can be evaluated more quickly by omitting detailed computational analysis (e.g., finite element analysis) and, instead, can be evaluated based on stored component definitions retained by data module 16. Further, new component definitions that deviate to a substantial degree relative to stored component definitions can be evaluated using detailed computational analysis, the post-evaluated component definition added to the stored dataset to augment subsequent component evaluations.

Input module 18 is configured to receive data from one or more sources and aggregate the data into a component definition. Component definition initially includes at least component geometry and one or more associated boundary conditions and loads. Post-evaluation, component definitions can include one or more result sets and/or evaluation dispositions. The data sources for component definition can be received from the same source, or different sources. For example, users may input data for component definition via user interface (e.g., a CAD model of component, a finite element model of the component, among other potential inputs). In other examples, data for component definitions, or portions thereof, can be received from other automated or semi-automated processes such as an as-manufactured inspection and/or quality assurance process (e.g., a three-dimensional scanning apparatus, system tests, and rig test, among other potential sources).

Component geometry records describe a two-dimensional representation and/or a three-dimensional representation of the component. Component geometry can include a subset of dimensions from which a complete representation of the component can be produced by component evaluation system 10. Other examples of component geometries include two-dimensional and/or three-dimensional computer aided design (CAD) models and point cloud data of the component produced by a physical inspection system and/or laser scanning inspection system. Component geometry can be represented by nominal geometry and respective tolerance margins, or geometric variances determined between measured geometry and nominal geometry. Component geometry can describe one or more exterior geometry features and/or internal geometry features of component. Exterior geometry features include, but are not limited to, exterior surfaces of the component including but not limited to cooling flow paths, effusion cooling hole patterns, component attachment features, component interfaces, and the like. Interior geometry features include, but are not limited to, internal structure of the component, cooling passages, and the like. Boundary condition records can include one or more restraints and/or supports in a three-dimension cartesian coordinate system and/or polar coordinate system. Load records can include one or more mechanical loads, aerodynamic loads, and/or thermal loads.

Data module 16 includes at least one data set 32A and up to an arbitrary number of data sets 32N in which "N" represents an arbitrary number. Each of data sets 32A-32N includes at least one or more data records, each record within a set having a common data type. Example data sets include component geometry, component envelope, results from finite element result (FEA) analysis of a component, system test data, rig test data, specimen FEA results, legacy geometric designs and associated legacy design data, and historical computations produced by component evaluation system 10, among other possible data sets.

Component envelope data 32A can include a two-dimensional area and/or a three-dimensional volume for comparison with component geometry. Component envelop data 32A can also include one or more boundary condition records and/or one or more mechanical loads, aerodynamic loads, and thermal loads associated with the geometric design envelope data.

Finite element analysis (FEA) result records 32B can include any nodal and/or element result data associated with the component. Nodal and/or element result records can include material property data (e.g., density, thermal conductivity, modulus of elasticity, yield strength, etc.), mechanical boundary condition data, mechanical and/or aerodynamic loads, temperature data, deflection data, stress data, and strain data, among other potential nodal and/or element data. FEA result data can be produced by an analysis of the component, or an analysis of a specimen (FEA specimen results 32E), which are representative of a portion of the component.

System test results 32C include data collected and/or measured during an experimental test of the component in an installed condition or fully assembled condition, and derivative data determined from such data. For example, system tests include instrumented operation of a gas turbine engine that includes the component. System test result records 32C can include measured gas composition, gas flow, gas temperature, and/or gas pressure of gas turbine engine flow paths, or bleed air paths. System test result records 32C can include operating set points for the gas turbine engine such as rotational speed of a low-pressure shaft, a high-pressure shaft, a power turbine shaft, a propeller, and/or a fan. System test result records 32C may further include fuel flow rate and/or power level, among other potential parameters of system test.

Rig test result records 32D include data collected and/or measured during an experimental test of the component installed within a test fixture configured to represent the fully assembled condition of the component, and derivative data determined from such data. Rig test result records 32D can include test conditions such as gas flow, gas temperature, gas pressure, and mechanical boundary conditions as well as cooling gas flow, cooling gas temperature, cooling gas pressure, among other potential test conditions. Further, rig test result records 32D can include measured temperatures and/or strain at one or more locations of the component.

The database of legacy designs is a compilation of component designs created without FEA computation, or without component evaluation system 10. Legacy record data 32F can include component geometric data as well as mechanical, thermal, and/or aerodynamic boundary conditions of the component. Legacy record data 32F can further include calculated temperature, stress, strain, and/or deflection of one or more locations of component.

The database of FEA results and associated evaluations is a compilation of component designs and results data produced by component evaluation system 10. Prior component evaluation records 32G can include any of the foregoing record data types including nodal and/or element result data associated with a finite element analysis of the component including material property data, mechanical boundary condition data, mechanical and/or aerodynamic loads, temperature data, deflection data, stress data, and strain data, among other potential nodal and/or element data. Component evaluation records 32G can further include an evaluation disposition, a determination of whether a component satisfies one or more design criteria.

Compute module 20 includes comparator model 34 and analysis model 36 for evaluating component definition. Specifically, comparator model 34 determines whether detailed analysis of a new component definition is required based on a comparison of the new component definition and stored component definitions. Upon comparator model 34 determining that the new component definition is similar to stored component definitions, analysis model 36 determines and outputs result sets based on stored component definitions.

Comparator model 34 is a machine learning model that utilizes a supervised learning algorithm (e.g., a regression algorithm or a classification algorithm) to output a decision parameter (e.g., detailed analysis required or detailed analysis not required) based on a comparison of corresponding data sets of the new component definition and the stored component definition. In each instance, comparator model 34 includes an array of weights, each weight associated with one of the data records of component definition. The weights of comparator model 34 are trained using stored component definitions, each component definition associated with an evaluation disposition (e.g., compliant design or non-compliant design) and one or more other data sets 32A-32N. Weights of comparator model 34 can be updated from time to time based on new component definitions, which received detailed analysis or other component definition data that becomes available.

Upon comparator model 34 determining a new component definition does not require detailed analysis, comparator model 34 transfers component definition to analysis model 36 for iterative analysis. In this instance, analysis model 36 evaluates result data of component definition based on stored component definition data. For example, stored component definitions can include the same component geometry evaluated at a variety of different operating conditions such that load sets for each stored component definition differ. A new component definition that includes a load set that is bounded by one or more load sets of geometrically similar component definitions can be used to compute results sets for the new component definition via a machine-learning subroutine and/or an interpolation routine. In another example, the new component definition may have an identical exterior and/or interior geometry to a subset of stored component definitions except for a pattern or configuration of cooling holes, cooling passages, and the like. In this instance, analysis model 36 may determine results sets for the new component definition based on the subset of stored component definitions via a machine-learning model and/or interpolation routine. In either of the foregoing examples, the analysis model 36 may identify stored component definitions that are geometrically similar or may identify stored component definitions with minor geometry changes and identical load sets and output the identified component definitions to user interface 14 for review by the user. In this way, new component definitions can be evaluated without performing detailed analysis, which may include additional finite element analysis (FEA), system tests, specimen tests, and/or rig tests.

Upon comparator model 34 determining a new component definition does require detailed analysis, comparator model 34 transfers component definition to analysis model 36 for detailed analysis. In this instance, analysis model 36 can include an automated analysis routine to perform a new finite element analysis and/or recommend additional system test, rig tests, and/or specimen tests.

In each instance, analysis model 36 outputs one or more nodal solutions and/or element solutions based on the component definition. Analysis model 36 can further identify result data sets with similar component definitions for aiding the determination of the evaluation disposition. In other examples, analysis model 36 can identify system tests, rig tests, and specimen finite element analyses based on a boundary condition space and/or a load space encompassed by prior component evaluations. Results sets produced from additional FEA, system tests, rig tests, and/or specimen tests are aggregated into a new component definition.

Results module 22 receives one or more outputs from analysis model 36 and is configured to output an evaluation disposition (e.g., compliant design or non-compliant design) based the received outputs. Results module 22 displays the results sets and the recommended evaluation disposition to user interface 14. User can review the component definition including the result sets and the recommended evaluation disposition via the user interface 14. Upon accepting the recommended disposition evaluation, the user can cause results module 22 to transfer the post-evaluated component disposition to data module 16 for storage. Upon rejecting the recommended disposition, the user can alter the evaluation disposition (e.g., changing non-compliant design to compliant design and vice versa) and cause results module 22 to transfer the modified component definition to data module 16 for storage.

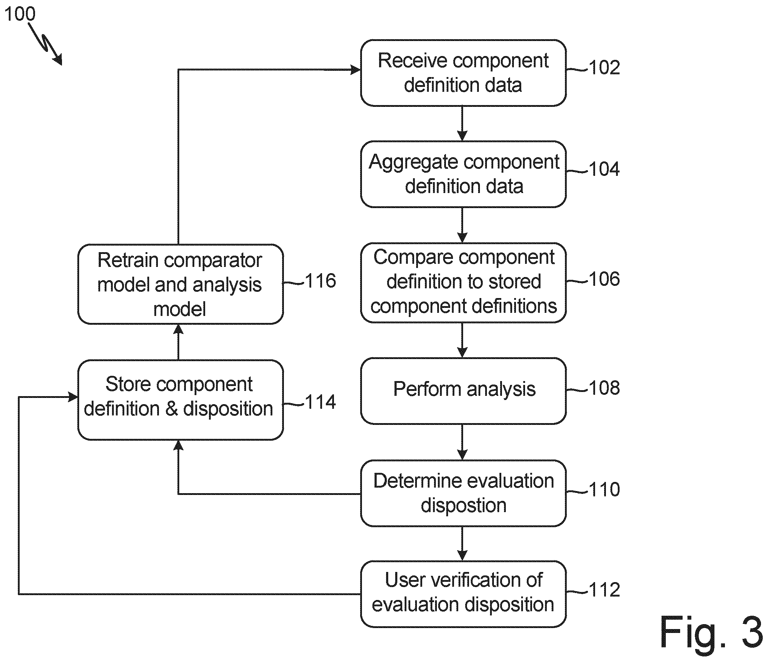

FIG. 3 is a flow chart describing a method of using component evaluation system 10. The sequence depicted is for illustrative purposes only and is not meant to limit method 100 in any way as it is understood that the portions of the method can proceed in a different logical order, additional or intervening portions can be included, or described portions of the method can be divided into multiple portions, or described portions of the method can be omitted without detracting from the described above. Method 100 includes steps 102, 104, 106, 108, 110, 112, 114, and 116.

Component evaluation system 10 receives a component definition, or data relating to at least a portion of component definition in step 102. Receiving the component definition can include data inputted by a user via user interface 14. For example, a user may create or input data relating to a pre-existing component definition such as a two-dimensional and/or a three-dimensional CAD model, component and/or specimen finite element analysis, system test results, rig test results, and/or legacy component data, among other data records. In another example, inspection data produced by a three-dimensional scan of an as-manufactured component can be received automatically from a quality and assurance process, or by manual input from a user via user interface 14. In yet another example, data can be received via user interface and via another manual and/or automated process, among other potential sources.

In step 104, input module 18 aggregates received data by associating the data with a component definition identifier, for example, a unique alphanumeric label or other unique identifier. Aggregated data becomes a component definition. Initially, component definitions can be incomplete, missing at least some data included in other component definitions stored by data module 16. Data can append and/or modify a component definition periodically as more data is available such as from additional testing and/or additional analyses.

Initially, data module 16 may not store any stored component definition data. In this instance, component definition is transferred to analysis model 36 for detailed analysis. After data module 16 accumulates one or more component definitions, comparator model 34 compares component definition to stored component definitions using comparator model 34 in step 106.

Comparing component definitions includes at least comparing component geometry to component envelop data to identify similar component definitions. For example, multiple component definitions may relate to the same part number of a gas turbine engine, each evaluated with one or more different material properties, boundary conditions, mechanical loads, aerodynamic loads, and/or thermal loads. In another example, multiple component definitions may relate to geometrically similar albeit not identical components such as analogous components from different gas turbine engines. In this way, similar component geometries can be evaluated at different operating conditions of the gas turbine engine or family of similar gas turbine engines.

Comparing component definitions can additionally include comparing one or more material properties, boundary conditions, mechanical loads, aerodynamic loads, and/or thermal loads. For example, component definitions with identical geometry or similar geometry to be associated with multiple load sets that define an analysis space of the component. In this way, component geometries with identical or similar geometries can be analyzed at multiple boundary condition and/or load sets.

Upon comparator model 34 determining that the component geometry is not consistent with any component envelope (i.e., the component is not similar to any stored component definition), the comparator model 34 determines further analysis is required and transfers the component definition to analysis model 36 for detailed analysis. Upon comparator model 34 determining that the component geometry is consistent or falls within a geometry envelope of one or more stored component definitions, the comparator model 34 further compares one or more material properties, boundary conditions, and/or loads of the component definition with the subset of stored component definitions that are geometrically similar (i.e., a subset of component definitions with component geometries encompassed by the component envelope). Upon comparator model 34 determining that material properties, boundary conditions, and loads of component definition are bound by corresponding material properties, boundary conditions, and loads of the subset of stored component definitions, comparator model 34 transfers component definition to analysis model 36 for iterative analysis. However, when comparator model 34 determines that one or more material properties, boundary conditions, and/or loads are not bound by respective component definition, comparator model transfers component definition to analysis model 36 for detailed analysis.

In step 108, analysis model 36 performs an interactive analysis or a detailed analysis based on the determination of comparator model 34. Iterative analysis can include determining one or more nodal and/or element solutions of the component based on the component definition and at least a subset of stored component definitions. Detailed analysis can include performing a finite element analysis based on the component definition and/or providing recommended system tests, rig tests, and/or specimen tests based on the component definition and stored component definitions.

In step 110, one or more result sets are transferred to results module 22 to perform an evaluation of the component definition. Based on one or more results sets, results module 22 provides a recommended evaluation disposition. The result sets and the recommended disposition are displayed or otherwise made accessible to user interface 14 in step 112. The user reviews the recommended disposition and in view of the result sets accepts or modifies the recommended disposition before results module 22 transfers the component definition to data module 16 for storage and subsequent training of comparator model 34 and/or analysis model 36. In step 114, the component definition and evaluation disposition are stored by data module 16, which can be used during retraining of comparator model 34 and analysis model 36 in step 116.

Accordingly, component evaluation module 10 reduces the time and cost for evaluating new component definitions by distinguishing between component definitions that are substantially new and component definitions that represent small deviations with respect to stored component definitions.

### Discussion of Possible Embodiments

The following are non-exclusive descriptions of possible embodiments of the present invention.

### A method for evaluating a component

A method for evaluating a component according to an example embodiment of this disclosure includes, among other things, receiving a component definition that includes component geometry and at least one of a boundary condition set and a load set by an input module. The method further including comparing, using a comparator model, the component geometry to one or more design envelope associated with stored component definitions, the component geometry defining one or more geometric parameters, and the design envelope defining one or more geometric limits of the component. The method further includes comparing, using the comparator model, the load set to load sets associated with a subset of stored component definitions, the load set defining one or more mechanical loads, aerodynamic loads, and thermal loads. The method further includes performing, using an analysis model, an analysis based on the component definition and the subset of stored component definitions upon determining the one or more geometric parameters are bound by respective geometric limits and at least one of the mechanical loads, the aerodynamic loads, and the thermal loads of the subset of stored component definitions bound corresponding mechanical loads, aerodynamic loads, and thermal loads of the component definition. The method further includes outputting an evaluation disposition to a user interface based on the analysis and incorporating the component into a gas turbine engine based on the evaluation disposition.

The method of the preceding paragraph can optionally include, additionally and/or alternatively, any one or more of the following features, configurations, additional components, and/or steps:
performing, using the analysis model, the analysis based on the component definition upon determining the one or more geometric parameters are not bound by respective geometric limits of the stored component definitions, or upon determining the one or more of mechanical loads, aerodynamic loads, and thermal loads of the stored component definitions do not bound corresponding mechanical loads, aerodynamic loads, and thermal loads of the component definition;
outputting one or more recommended finite element analysis, system tests, rig tests, and/or specimen tests based on the analysis;
reviewing the evaluation disposition by a user;
accepting the evaluation disposition or modifying the evaluation disposition by the user based on the result set;
appending the stored component definitions with the component definition and evaluation disposition;
modifying weights of the comparator model based on the component definition and evaluation disposition.

### A component evaluation system

A component evaluation system according to an example embodiment of this disclosure includes, among other things, a user interface, an input module, a data module, a compute module, a results module, a processor, and computer-readable memory. The input module is configured to receive a component definition. The data module includes stored component definitions. The compute module includes a comparator model and an analysis model. The results module is configured to evaluate result sets output by the analysis model. The computer-readable memory is encoded with instructions that when executed by the processor cause the component evaluation system to receive, by the input module, the component definition that includes component geometry and at least one of a boundary condition set and a load set. The computer-readable memory is further encoded with instructions that when executed by the processor cause the component evaluation system to compare, using the comparator model, the component geometry to one or more design envelopes associated with stored component definitions. The component geometry defines one or more geometric parameters, and the design envelope defines one or more geometric limits of the component. The computer-readable memory is further encoded with instructions that when executed by the processor cause the component evaluation system to compare, using the comparator model, the load set to load sets associated with a subset of stored component definitions. The load set defines one or more mechanical loads, aerodynamic loads, and thermal loads. The computer-readable memory is further encoded with instructions that when executed by the processor cause the component evaluation system to perform, using the analysis model, an analysis based on the component definition and the subset of stored component definitions upon determining the one or more geometric parameters are bound by respective geometric limits and at least one of the mechanical loads, aerodynamic loads, and the thermal loads of the subset of stored component definitions bound corresponding mechanical loads, aerodynamic loads, and thermal loads of the component definition. The computer-readable memory is further encoded with instructions that when executed by the processor cause the component evaluation system to output, by the results module, an evaluation disposition to a user interface based on a result set output by the analysis.

The component evaluation system of the preceding paragraph can optionally include, additionally and/or alternatively, any one or more of the following features, configurations, and/or additional components:
the computer-readable memory can include further instructions that when executed by the processor cause the component evaluation system to perform, using the analysis model, the analysis based on the component definition upon determining the one or more geometric parameters are not bound by respective geometric limits of the stored component definitions, or upon determining the one or more of mechanical loads, aerodynamic loads, and thermal loads of the stored component definitions do not bound corresponding mechanical loads, aerodynamic loads, and thermal loads of the component definition;
the computer-readable memory can include further instructions that when executed by the processor cause the component evaluation system to output, by the analysis model, one or more recommended finite element analysis, system tests, rig tests, and/or specimen tests based on the analysis;
the computer-readable memory can include further instructions that when executed by the processor cause the component evaluation system to receive, via the user interface from a user, an acceptance or a modification of the evaluation disposition;
the computer-readable memory can include further instructions that when executed by the processor cause the component evaluation system to append the stored component definitions of the data module with the component definition and evaluation disposition;
the computer-readable memory can include further instructions that when executed by the processor cause the component evaluation system to modify, by the compute module, weights of the comparator model based on the component definition and evaluation disposition.

### A computing device

A computing device according to an example embodiment of this disclosure includes, among other things, one or more processors and computer-readable memory. The computer-readable memory is encoded with instructions that when executed by the one or more processors, cause the computing device to receive a component definition including component geometry and at least one of a boundary condition set and a load set. The computer-readable memory is further encoded with instructions that when executed by the one or more processors, cause the computing device to compare the component geometry to one or more design envelopes associated with stored component definitions, the component geometry defining one or more geometric parameters, and the design envelope defining one or more geometric limits of the component. The computer-readable memory is further encoded with instructions that when executed by the one or more processors, cause the computing device to compare, using a comparator model, the load set to load sets associated with a subset of stored component definitions, the load set defining one or more of mechanical loads, aerodynamic loads, and thermal loads. The computer-readable memory is further encoded with instructions that when executed by the one or more processors, cause the computing device to perform an analysis based on the component definition and the subset of stored component definitions upon determining the one or more geometric parameters are bound by respective geometric limits and at least one of the mechanical loads, aerodynamic loads, and the thermal loads bound corresponding mechanical loads, aerodynamic loads, and thermal loads of the component definition. The computer-readable memory is further encoded with instructions that when executed by the one or more processors, cause the computing device to output, by the results module, an evaluation disposition to a user interface based on a result set output by the analysis.

The computing device of the preceding paragraph can optionally include, additionally and/or alternatively, any one or more of the following features, configurations, and/or additional components:
the computer-readable memory can be further encoded with instructions that when executed by the one or more processors, cause the computing device to perform the analysis based on the component definition upon determining the one or more geometric parameters are not bound by respective geometric limits of the stored component definitions, or upon determining the one or more of mechanical loads, aerodynamic loads, and thermal loads of the stored component definitions do not bound corresponding mechanical loads, aerodynamic loads, and thermal loads of the component definition;
the computer-readable memory can be further encoded with instructions that when executed by the one or more processors, cause the computing device to output one or more recommended finite element analysis, system tests, rig tests, and/or specimen tests based on the analysis;
the computer-readable memory can be further encoded with instructions that when executed by the one or more processors, cause the computing device to receive, via the user interface from a user, an acceptance or a modification of the evaluation disposition;
the computer-readable memory can be further encoded with instructions that when executed by the one or more processors, cause the computing device to append the stored component definitions of the data module with the component definition and evaluation disposition;
the computer-readable memory can be further encoded with instructions that when executed by the one or more processors, cause the computing device to modify, by the compute module, weights of the comparator model based on the component definition and evaluation disposition.

While the invention has been described with reference to an exemplary embodiment(s), it will be understood by those skilled in the art that various changes may be made and equivalents may be substituted for elements thereof without departing from the scope of the invention as defined by the appended claims. Therefore, it is intended that the invention not be limited to the particular embodiment(s) described in detail herein , but that the invention will include all embodiments falling within the scope of the appended claims.

## Claims

1. A method for evaluating a component, the method comprising:
receiving, by an input module, a component definition including component geometry and at least one of a boundary condition set and a load set;
comparing, using a comparator model, the component geometry to one or more design envelopes associated with stored component definitions, the component geometry defining one or more geometric parameters, and the design envelope defining one or more geometric limits of the component;
comparing, using the comparator model, the load set to load sets associated with a subset of stored component definitions, the load set defining one or more of mechanical loads, aerodynamic loads, and thermal loads; and
performing, using an analysis model, an analysis based on the component definition and the subset of stored component definitions upon determining the one or more geometric parameters are bound by respective geometric limits and at least one of the mechanical loads, aerodynamic loads, and the thermal loads of the subset of stored component definitions bound corresponding mechanical loads, aerodynamic loads, and thermal loads of the component definition;
outputting an evaluation disposition to a user interface based on the analysis; and
incorporating the component into a gas turbine engine based on the evaluation disposition.

2. The method of claim 1, further comprising:
performing, using the analysis model, the analysis based on the component definition upon determining the one or more geometric parameters are not bound by respective geometric limits of the stored component definitions, or upon determining the one or more of mechanical loads, aerodynamic loads, and thermal loads of the stored component definitions do not bound corresponding mechanical loads, aerodynamic loads, and thermal loads of the component definition.

3. The method of claim 1 or 2, further comprising:
outputting one or more recommended finite element analysis, system tests, rig tests, and/or specimen tests based on the analysis.

4. The method of any preceding claim, further comprising:
reviewing the evaluation disposition by a user; and
accepting the evaluation disposition or modifying the evaluation disposition by the user based on the result set.

5. The method of any preceding claim, further comprising:
appending the stored component definitions with the component definition and evaluation disposition; and
modifying weights of the comparator model based on the component definition and evaluation disposition.

6. A component evaluation system comprising:
a user interface;
an input module configured to receive a component definition;
a data module comprising stored component definitions;
a compute module comprising a comparator model and an analysis model;
a results module configured to evaluate result sets output by the analysis model;
a processor; and
computer-readable memory encoded with instructions that when executed by the processor cause the component evaluation system to:
receive, by the input module, the component definition including component geometry and at least one of a boundary condition set and a load set;
compare, using the comparator model, the component geometry to one or more design envelopes associated with stored component definitions, the component geometry defining one or more geometric parameters, and the design envelope defining one or more geometric limits of the component;
compare, using the comparator model, the load set to load sets associated with a subset of stored component definitions, the load set defining one or more of mechanical loads, aerodynamic loads, and thermal loads; and
perform, using the analysis model, an analysis based on the component definition and the subset of stored component definitions upon determining the one or more geometric parameters are bound by respective geometric limits and at least one of the mechanical loads, aerodynamic loads, and the thermal loads bound corresponding mechanical loads, aerodynamic loads, and thermal loads of the component definition; and
output, by the results module, an evaluation disposition to a user interface based on a result set output by the analysis.

7. The component evaluation system of claim 6, wherein the computer-readable memory includes further instructions that when executed by the processor cause the component evaluation system to:
perform, using the analysis model, the analysis based on the component definition upon determining the one or more geometric parameters are not bound by respective geometric limits of the stored component definitions, or upon determining the one or more of mechanical loads, aerodynamic loads, and thermal loads of the stored component definitions do not bound corresponding mechanical loads, aerodynamic loads, and thermal loads of the component definition.

8. The component evaluation system of claim 6 or 7, wherein the computer-readable memory includes further instructions that when executed by the processor cause the component evaluation system to:
output, by the analysis model, one or more recommended finite element analysis, system tests, rig tests, and/or specimen tests based on the analysis.

9. The component evaluation system of any of claims 6 to 8, wherein the computer-readable memory includes further instructions that when executed by the processor cause the component evaluation system to:
receive, via the user interface from a user, an acceptance or a modification of the evaluation disposition.

10. The component evaluation system of any of claims 6 to 9, wherein the computer-readable memory includes further instructions that when executed by the processor cause the component evaluation system to:
append the stored component definitions of the data module with the component definition and evaluation disposition; and
modify, by the compute module, weights of the comparator model based on the component definition and evaluation disposition.

11. A computing device comprising:
one or more processors; and
computer-readable memory encoded with instructions that, when executed by the one or more processors, cause the computing device to:
receive a component definition including component geometry and at least one of a boundary condition set and a load set;
compare the component geometry to one or more design envelopes associated with stored component definitions, the component geometry defining one or more geometric parameters, and the design envelope defining one or more geometric limits of the component;
compare the load set to load sets associated with a subset of stored component definitions, the load set defining one or more of mechanical loads, aerodynamic loads, and thermal loads; and
perform an analysis based on the component definition and the subset of stored component definitions upon determining the one or more geometric parameters are bound by respective geometric limits and at least one of the mechanical loads, aerodynamic loads, and the thermal loads bound corresponding mechanical loads, aerodynamic loads, and thermal loads of the component definition; and
output an evaluation disposition to a user interface based on a result set output by the analysis.

12. The computing device of claim 11, wherein the computer-readable memory is further encoded with instructions that, when executed by the one or more processors, cause the computing device to:
perform the analysis based on the component definition upon determining the one or more geometric parameters are not bound by respective geometric limits of the stored component definitions, or upon determining the one or more of mechanical loads, aerodynamic loads, and thermal loads of the stored component definitions do not bound corresponding mechanical loads, aerodynamic loads, and thermal loads of the component definition.

13. The computing device of claim 11 or 12, wherein the computer-readable memory is further encoded with instructions that, when executed by the one or more processors, cause the computing device to:
output one or more recommended finite element analysis, system tests, rig tests, and/or specimen tests based on the analysis.

14. The computing device of any of claims 11 to 13, wherein the computer-readable memory is further encoded with instructions that, when executed by the one or more processors, cause the computing device to:
receive, via the user interface from a user, an acceptance or a modification of the evaluation disposition.

15. The computing device of any of claims 11 to 14, wherein the computer-readable memory is further encoded with instructions that, when executed by the one or more processors, cause the computing device to:
append the stored component definitions of the data module with the component definition and evaluation disposition; and
modify, by the compute module, weights of the comparator model based on the component definition and evaluation disposition.
